# EUROPÄISCHE PATENTSCHRIFT

(11) **EP 1 844 222 B1**
(45) Veröffentlichungstag und Bekanntmachung des Hinweises auf die Patenterteilung: **22.09.2010**
(21) Anmeldenummer: 05821672.2
(22) Anmeldetag: 20.12.2005
(51) Int. Cl.: F02B 37/04, F02B 37/14, F02B 37/16

(54) **BRENNKRAFTMASCHINE MIT DOPPELAUFLADUNGEN UND VERFAHREN ZU BETREIBEN DIESER**
DUAL-CHARGED INTERNAL COMBUSTION ENGINE AND METHOD FOR OPERATING THE SAME
MOTEUR A COMBUSTION INTERNE A DOUBLE SURALIMENTATION, ET PROCEDE POUR FAIRE FONCTIONNER CE MOTEUR

(30) Priorität: 28.01.2005 DE 102005004122
(43) Veröffentlichungstag der Anmeldung: 17.10.2007
(73) Patentinhaber: Volkswagen AG, 38436 Wolfsburg (DE)
(72) Erfinder: NOODT, Florian, 38173 Sickte (DE); SCHWEIZER, Marc-Jochen, 38106 Braunschweig (DE); KLOFT, Manfred, 38154 Königslutter (DE)
(74) Vertreter: Kandlbinder, Markus Christian
(86) Internationale Anmeldenummer: PCT/EP2005/013730
(87) Internationale Veröffentlichungsnummer: WO 2006/079403

(56) Entgegenhaltungen:
- DE-A1- 4 202 077
- DE-A1- 4 320 045
- DE-A1- 10 332 989
- DE-A1- 19 928 523
- US-A- 4 730 457
- PATENT ABSTRACTS OF JAPAN Bd. 013, Nr. 514 (M-894), 17. November 1989 (1989-11-17) & JP 01 208520 A (HITACHI LTD; others: 01), 22. August 1989 (1989-08-22)

## Beschreibung

Brennkraftmaschine, insbesondere eines Kraftfahrzeugs, mit einem Luftpfad für Ansaugluft, in dem ein über eine Kupplung zu- und abschaltbares, mechanisch angetriebenes Aufladeaggregat , insbesondere ein Kompressor, ein Abgasturbolader, ein mit Lufteinlässen eines Zylinderblocks der Brennkraftmaschine verbundenes Saugrohr und ein Ladeluftkühler angeordnet sind, wobei ein Druckausgang des mechanisch angetriebenen Aufladeaggregats direkt mit dem Saugrohr und ein Druckausgang des Abgasturboladers mit einem Saugeingang des mechanisch angetriebenen Aufladeaggregats verbunden ist, gemäß dem Oberbegriff des Patentanspruchs 1. Die Erfindung betrifft ferner ein Verfahren zum Betreiben dieser Brennkraftmaschine, gemäß dem Oberbegriff des Patentanspruchs 3.

US 4 903 488 offenbart eine Brennkraftmaschine mit einem Luftpfad für Ansaugluft, in dem ein Kompressor, ein Abgasturbolader und eine Drosselklappe angeordnet sind, wobei ein Ausgang des Kompressors mit einem Eingang des Abgasturboladers verbunden ist und stromab des Abgasturboladers die Drosselklappe angeordnet ist. In einem den Kompressor überbrückender Luftkanal ist eine Verdichtungsdrosselklappe angeordnet, welche ausschließlich diesen den Kompressor überbrückenden Luftkanal wahlweise schließt.

Aus der gattungsgemäßen DE 32 27 459 A1 ist eine Anordnung zum Aufladen einer Brennkraftmaschine, bestehend aus einer Kombination eines Abgasturboladers mit einem von der Welle der Brennkraftmaschine mechanisch angetriebenen Verdichter, der beim Anfahren und den unteren Drehzahlbereichen die Aufladung besorgt und bei Erreichen des ausreichenden Ladendrucks des Abgasturboladers abgeschaltet und bei Absinken dieses Druckes wieder eingeschaltet wird, bekannt. Ein Druckausgang des mechanischen Verdichters mündet direkt in ein Saugrohr der Brennkraftmaschine. In einer bevorzugten Ausführungsform wird die gesamte Ladeluft vom Abgasturbolader durch den mechanisch angetriebenen Verdichter geführt, der bei Leerlauf für den gesamten Durchsatz der Ladeluft voll durchgängig ist. Solange der Abgasturbolader wegen zu niedriger Drehzahl nicht genügend Ladeluft fördert, also im Anfahren und im unteren Drehzahlbereich, wird die Brennkraftmaschine vom mechanischen Verdichter aufgeladen. Erreicht der Abgasturbolader in den höheren Drehzahlbereichen eine ausreichende Leistungen, läuft der mechanische Verdichter leer mit, also in denjenigen Drehzahlbereichen, in denen die Leistungen des mechanischen Laders absinken würde. Alternativ wird eine Anordnung mit Bypassleitung für den Verdichter vorgeschlagen, wobei die Bypassleitung bei Betrieb des Verdichters von einer Klappe verschlossen wird. Diese Klappe wird geöffnet, sobald der Verdichter nicht mehr mechanisch angetriebenen wird, d.h. in den höheren Lastbereichen, in denen der Abgasturbolader einen ausreichenden Ladedruck zur Verfügung stellen kann.

DE 4320045 und DE 103 32 989 offenbaren ähnliche Brennkraftmaschinen. Der Erfindung liegt die Aufgabe zugrunde, eine Brennkraftmaschine der o.g. Art bezüglich Aufbau, Montage und Betriebsweise zu verbessern.

Diese Aufgabe wird erfindungsgemäß durch eine Brennkraftmaschine der o.g. Art mit den in Anspruch 1 gekennzeichneten Merkmalen und durch ein Verfahren der o.g. Art mit denen Anspruch 3 angegebenen Merkmalen gelöst. Vorteilhafte Ausgestaltungen der Erfindung sind in den weiteren Ansprüchen beschrieben.

Dazu ist es bei einer Brennkraftmaschine der o.g. Art erfindungsgemäß vorgesehen, dass der Druckausgang des Abgasturboladers über eine 2-Punkt-Klappe mit dem Saugeingang des mechanisch angetriebenen Aufladeaggregats sowie stromauf der 2-Punkt-Klappe über eine Lastregelklappe mit dem Saugrohr verbunden ist, wobei der Ladeluftkühler in das Saugrohr zu einem Saug-Ladeluftkühler-Modul integriert ist.

Dies hat den Vorteil, dass durch die besondere Anordnung der Aufladeaggregate im Luftpfad zum Saugrohr und die Einbindung des Ladeluftkühlers in das Saugrohr auf eine sonst notwendige Drosselklappe verzichtet werden kann und gleichzeitig ein sehr geringes Volumen zwischen mechanisch angetriebenem Aufladeaggregat und Brennraum vorhanden ist, so dass sich das dynamische Verhalten wesentlich verbessert.

Zweckmäßigerweise ist die 2-Punkt-Klappe derart ausgebildet ist, dass sie in vollständig geschlossenem Zustand den Luftpfad zum Saugeingang des mechanisch angetriebenen Aufladeaggregats im Wesentlichen gegen einen Nebenluftstrom über das mechanisch angetriebene Aufladeaggregat abdichtet.

Bei einem Verfahren der o.g. Art ist es erfindungsgemäß vorgesehen, dass in solchen Betriebszuständen der Brennkraftmaschine, in denen durch den Abgasturbolader die momentane Momentenanforderung dargestellt werden kann, die 2-Punkt-Klappe in ihre vollständig geschlossene Stellung gebracht und das mechanisch angetriebene Aufladeaggregat deaktiviert wird sowie die Lastregelungen mittels der Lastregelklappe und/oder der Einstellung des Turboladers erfolgt, wobei in solchen Betriebszuständen der Brennkraftmaschine, in denen die momentane Momentenanforderung über das maximal vom Abgasturbolader darstellbare Moment hinaus geht, die 2-Punkt-Klappe in ihre vollständig geöffnete Stellung gebracht, das mechanisch angetriebene Aufladeaggregat aktiviert wird und die Lastregelklappe soweit, wie zum Erreichen der Momentenanforderung notwendig ist, geschlossen wird.

Dies hat den Vorteil, dass die in dem Saug-Ladeluftkühler-Modul angebrachte Lastregelklappe eine Doppelfunktion hat, nämlich einerseits die Funktion einer klassischen Drosselklappe in solchen Betriebszuständen hat, in denen der Abgasturbolader das von der Brennkraftmaschine geforderte Moment zur Verfügung stellen kann, wie auch andererseits die Funktion einer Umluftregelklappe für eine Bypassleitung des mechanisch angetriebenen Aufladeaggregats bei hohen momentanen Momentanforderungen, die über die Kapazität des Abgasturboladers hinausgehen, hat, sodass auf ein zusätzliches Leistungsstellglied im Luftpfad verzichtet werden kann.

Zweckmäßigerweise wird die 2-Punkt-Klappe im Leerlauf und unterem Teillastbereich geschlossen und in allen anderen Betriebszuständen vollständig geöffnet.

Die Erfindung wird im folgenden anhand der Zeichnung näher erläutert. Diese zeigt in
- Fig. 1: eine schematische Darstellung einer bevorzugten Ausführungsform einer erfindungsgemäßen Brennkraftmaschine,
- Fig. 2: eine grafische Veranschaulichung eines Last-Drehzahl-Diagramms und
- Fig. 3: eine grafische Veranschaulichung des Betriebs der erfindungsgemäßen Brennkraftmaschine.

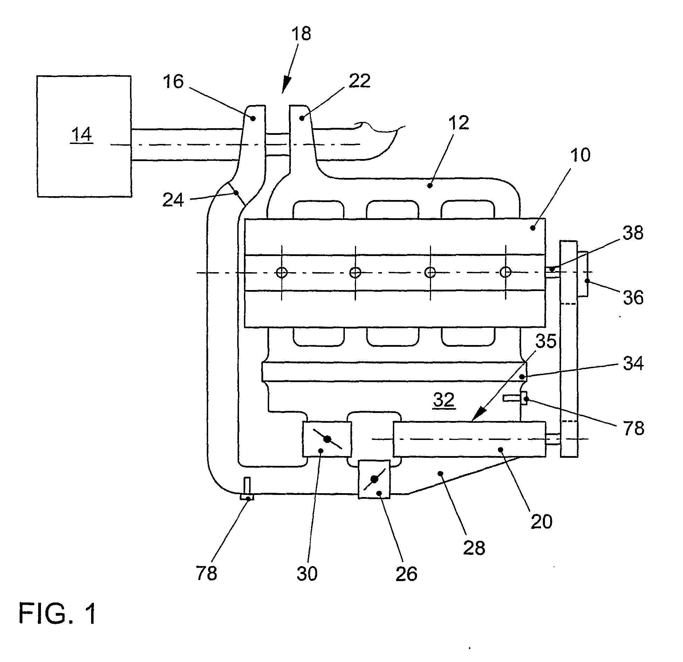

Die aus Fig. 1 ersichtliche bevorzugten Ausführungsform einer erfindungsgemäßen Brennkraftmaschine umfasst einen Motorblock 10, eine Abgasanlage 12 und einen Luftpfad zur Ansaugung von Verbrennungsluft bzw. Frischluft, in dem folgendes angeordnet ist, ein Luftfilter 14, ein Verdichter 16 eines Abgasturboladers 18 und ein mechanisch angetriebenes Aufladeaggregat 20, wie beispielsweise einen Kompressor. Eine Turbine 22 des Abgasturboladers 18 ist in der Abgasanlage 12 der Brennkraftmaschine angeordnet. Ein Druckausgang 24 des Abgasturboladers 18 ist über eine 2-Punkt-Klappe 26 mit einem Saugeingang 28 des mechanisch angetriebenen Aufladeaggregats 20 verbunden. Stromauf der Zwei-Punkt-Klappe 26 ist der Druckausgang 24 des Abgasturbolader 18 über eine Lastregelklappe 30 mit einem Saugrohr 32 verbunden. Zusätzlich ist ein Ladeluftkühler 34 vorgesehen, der in das Saugrohr 32 integriert ist. Der Ladeluftkühler 34 und Saugrohr 32 bilden zusammen einen Saug-Ladeluftkühler-Modul aus. Ein Druckausgang 35 des mechanisch angetriebenen Aufladeaggregats 20 ist direkt mit dem Saugrohr 32 verbunden. Hierdurch ergibt sich ein sehr geringes Volumen zwischen dem mechanisch angetriebenen Aufladeaggregat 20 und Brennräumen im Motorblock 10, wodurch sich das dynamische Verhalten deutlich verbessert. Das mechanisch angetriebene Aufladeaggregat 20 ist über eine Kupplung 36 mit einer Kurbelwelle 38 der Brennkraftmaschine verbunden und wird über diese mechanisch angetriebenen. Je nach Betriebszustand der Brennkraftmaschine wird die mechanische Verbindung zwischen mechanisch angetriebenem Aufladeaggregat 20 und Kurbelwelle 38 von der Kupplung 36 hergestellt oder getrennt. Mit 78 sind Druckgeber für eine Motorsteuerungen zum Messen des Druckes im Luftpfad und im Saugrohr 32 bezeichnet.

Der Ausdruck "2-Punkt-Klappe" bedeutet hierbei, dass diese Klappe lediglich zwei verschiedene Stellungen einnimmt, nämlich entweder vollständig geöffnet oder vollständig geschlossen (auf/zu Klappe). Zwischenstellungen sind nicht vorgesehen. Die 2-Punkt-Klappe 26 ist dabei derart ausgebildet, dass sie in vollständig geschlossener Stellung den Luftpfad zum Saugeingang 28 des mechanisch angetriebenen Aufladeaggregats 20 im Wesentlichen strömungsdicht absperrt, sodass ein Nebenluftstrom über das mechanisch angetriebene Aufladeaggregat 20 unterbunden ist.

Der Verdichter des Abgasturboladers 18 saugt Luft aus dem Luftfilter 14 an und fördert, je nach zur Verfügung gestellte Energie der Turbine 22 des Abgasturboladers 18, den Luftmassenstrom zur Lastregelklappe 30. Die Regelung der Leistungen des Abgasturboladers 18 bzw. der Turbine 22 erfolgt über ein Wastegate und gegebenenfalls eine variable Turbinengeometrie des Abgasturboladers 18. Die Lastregelklappe 30 ist direkt am Saug-Ladeluftkühler-Modul 32, 34 angeflanscht.

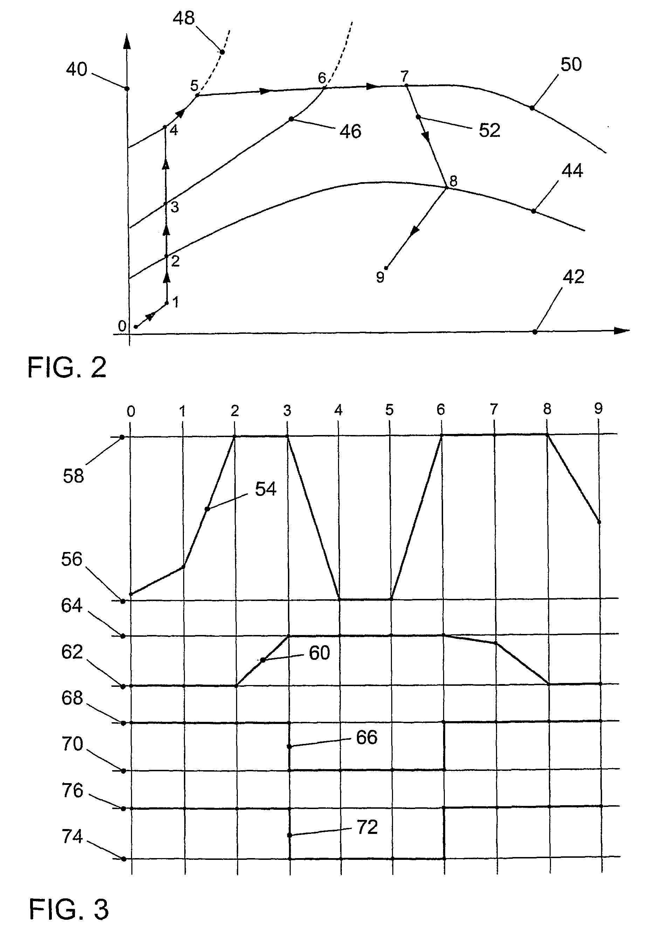

Fig. 2 zeigt ein Last-Drehzahl-Diagrammen, wobei auf der vertikalen Achse 40 ein Motormoment Md und auf der horizontalen Achse 42 eine Motordrehzahl nₘₒₜ aufgetragen ist. Ein Graph 44 kennzeichnet das in Abhängigkeit von der Motordrehzahl nₘₒₜ maximal erreichbare Motormoment bei Betrieb der Brennkraftmaschine als Saugmotor (Saugmotor-Volllast). Ein Graph 46 kennzeichnet das in Abhängigkeit von der Motordrehzahl maximal erreichbare Motormoment bei Betrieb der Brennkraftmaschine mit Turbolader (Turbolader-Volllast). Ein Graph 48 kennzeichnet das in Abhängigkeit von der Motordrehzahl maximal erreichbare Motormoment bei Betrieb der Brennkraftmaschine mit Turbolader und mechanisch angetriebenem Aufladeaggregat 20 (Aufladeaggregat- bzw. Kompressor-Volllast). Ein Graph 50 kennzeichnet das maximal vom Motor abgebare Motormoment (Maximallast). Ein Linienzug 52 über die Punkte 0 bis 9 im Last-Drehzahl-Diagrammen von Fig. 2 veranschaulicht einen beispielhaften Verlauf von Motormoment und Drehzahl.

Fig. 3 veranschaulicht grafisch für die Punkte 0 bis 9 des Linienzuges 52 eine Winkelstellung 54 der Lastregelklappe 30 zwischen einer vollständig geschlossenen Stellung 56 und einer ungedrosselten Stellung 58, einen Druck 60 nach dem Verdichter 16 des Abgasturboladers 18 zwischen einem Minimalwert 62 und einem Maximalwert 64, eine Stellung 66 der 2-Punkt-Klappe 26 zwischen der Position "zu" bzw. "vollständig geschlossen" 68 und der Position "auf" bzw. "vollständig geöffnet" 70 und einen Zustand 72 der Kupplung 38 zwischen "zu" bzw. "mechanische Verbindung zwischen Kurbelwelle 38 und mechanisch angetriebenem Aufladeaggregat 20 hergestellt" 74 und "auf" bzw. "mechanische Verbindung zwischen Kurbelwelle 38 und mechanisch angetriebenem Aufladeaggregat 20 getrennt" 76.

Der Linienzug 52 veranschaulicht einen Verlauf von Motormoment Md und Motordrehzahl nₘₒₜ, wobei vom Punkt 0 zum Punkt 1 des Linienzuges 52 das geforderte Motormoment ansteigt und vom Punkt 1 bis zum Punkt 4 des Linienzuges 52 das geforderte Motormoment Md sprunghaft auf einen Wert ansteigt, der über der Saugmotor-Volllast 44 und der Turbolader-Volllast 46 liegt. Vom Punkt 4 bis zum Punkt 6 des Linienzuges 52 bleibt das geforderte Motormoment über der Turbolader-Volllast 46 und auf der Maximallast 50. Bei Punkt 6 unterschreitet das geforderte Motormoment die Turbolader-Volllast 46 und bei Punkt 8 schließlich unterschreitet das geforderte Motormoment die Saugmotor-Volllast 44. Dieser Verlauf des Linienzuges 52 über die Punkte 0 bis 9 entspricht einem typischen Anfahrvorgang mit einem Kraftfahrzeug, welches die erfindungsgemäße Brennkraftmaschine als Antriebsaggregat enthält, wobei das geforderte Motormoment von einem Fahrer bestimmt wird.

Wie aus einem Vergleich mit Fig. 3 unmittelbar ersichtlich, erfolgt vom Punkt 0 bis zum Punkt 2 des Linienzuges 52 eine Lastregelung mittels der Lastregelklappe 30. Hierbei ist die 2-Punkt-Klappe 26 vollständig geschlossen, um einen Nebenluftstrom über das mechanisch angetriebene Aufladeaggregat 20 zu unterbinden. Vom Punkt 2 bis Punkt 3 des Linienzuges 52 erfolgt die Lastregelung mittels der Turbine 22 des Abgasturboladers 18 (über Wastegate, variable Turbinengeometrie usw.).

Wenn an Punkt 3 des Linienzuges 52 das geforderte Motormoment die Turbolader-Volllast 46 überschreitet, wird die 2-Punkt-Klappe 26 vollständig geöffnet, das mechanisch angetriebene Aufladegerät 20 durch schließen der Kupplung 36 (Graph 72 springt von "auf" 76 auf "zu" 74) aktiviert und die Lastregelklappe 30 bis zum erreichen des Punktes 4 geschlossen. In diesem Bereich arbeitet die Lastregelklappe 30 wie eine Umluftklappe des mechanisch angetriebenen Aufladeaggregates 20. Je weiter die Lastregelklappe 30 geschlossen wird, desto geringer ist der über die Lastregelklappe 30 aus dem Saugrohr 32 abfließende Massenstrom, d. h. der Ladedruck steigt mit dem schließen der Lastregelklappe 30 bei eingeschaltetem, mechanisch angetriebenem Aufladeaggregates 20 an.

Von Punkt 4 bis Punkt 5 ist die Lastregelklappe 30 vollständig geschlossen, die 2-Punkt-Klappe 26 geöffnet und die Kupplung 36 des mechanisch angetriebenen Aufladeaggregates 20 geschlossen. Dadurch wird der vom Verdichter 16 des Turboladers 18 gelieferte Massenstrom komplett durch das mechanisch angetriebene Aufladeaggregat 20 gefördert und dadurch maximal verdichtet. Beide Aufladeaggregate arbeiten mit maximalem Verdichtungsverhältnis.

In Punkt 5 wird das maximal erreichbare Motormoment (Graph 50) erreicht. Von Punkt 5 nach Punkt 6 wird durch öffnen der Lastregelklappe 30 der Saugrohrdruck auf das für das maximale Motormoment notwendige Niveau eingestellt. In Punkt 6 ist die Lastregelklappe 30 vollständig geöffnet und das mechanisch angetriebene Aufladeaggregat 20 wird durch öffnen der Kupplung 36 und schließen der 2-Punkt-Klappe 26 abgeschaltet. Ab Punkt 6 kann der Turbolader 18 den für das maximale Motormoment notwendigen Ladedruck alleine über das Wastegate, die variable Turbinengeometrie usw. bereitstellen. Ab Punkt 7 wird der für das geforderte Motormoment notwendige Ladedruck über die Stellung des Wastegates, variable Turbinengeometrie usw. abgesenkt, bis in Punkt 8 bei voll geöffneter Lastregelklappe 30 der minimale Ladedruck erreicht ist. Zum weiteren absenken des geforderten Momentes bis zum Punkt 9 wird dann die Lastregelklappe 30 so weit wie nötig geschlossen.

Bei geringer Momentenanforderung durch den Fahrer ist die 2-Punkt-Klappe 26 geschlossen, die Kupplung 36 des mechanisch angetriebenen Aufladeaggregates 20 geöffnet und der Abgasturbolader 18 wird über Wastegate, variable Turbinengeometrie usw. so eingestellt, dass möglichst wenig Ladedruck erzeugt wird. Die Lastregelung erfolgt hier wie bei einem Saugmotor: Je weiter die Lastregelklappe 30 geöffnet wird, desto höher ist der dem Motor zugeführte Luftmassenstrom. Steigt die Momentenanforderung über das so im Saugmotor-Modus maximal darstellbaren Moment an (Punkt 2 des Linienzuges 52) so wird über die Verstellung der Turbine 22 des Abgasturboladers 18 (Wastegate, variable Turbinengeometrie usw.) der Luftmassenstrom durch Erhöhung des Saugrohrdruckes das geforderte Motormoment eingestellt. Die Lastregelklappe 30 bleibt dabei geöffnet. Wird ein noch höheres Moment angefordert (Punkt 3 des Linienzuges 52), so wird die Kupplung 36 des mechanisch angetriebenen Aufladeaggregates 20 geschlossen und die 2-Punkt-Klappe 26 vollständig geöffnet. Durch Schließen der Lastregelklappe 30 wird der Ladedruck im Saugrohr 32 erhöht.

Durch die Umschaltung zwischen Doppelaufladung und alleinigen Betrieb mit Abgasturbolader 18 mittels zusammenwirken der Lastregelklappe 30 und der 2-Punkt-Klappe 26 kann durch die Doppelfunktion der Lastregelklappe 30 einerseits als Drosselklappe bei niedrigen Motormomenten unterhalb der Saugrohr-Volllast 44 und andererseits als Umluftklappe im Betrieb oberhalb der Turbolader-Volllast 46 eine sonst statt der 2-Punkt-Klappe 26 notwendige Drosselklappe entfallen.

## Patentansprüche

1. Brennkraftmaschine, insbesondere eines Kraftfahrzeugs, mit einem Luftpfad für Ansaugluft, in dem ein über eine Kupplung (36) zu- und abschaltbares, mechanisch angetriebenes Aufladeaggregat (20), insbesondere ein Kompressor, ein Abgasturbolader (18), ein mit Lufteinlässen eines Zylinderblocks (10) der Brennkraftmaschine verbundenes Saugrohr (32) und ein Ladeluftkühler (34) angeordnet sind, wobei ein Druckausgang (35) des mechanisch angetriebenen Aufladeaggregats (20) direkt mit dem Saugrohr (32) und ein Druckausgang (24) des Abgasturboladers (18) mit einem Saugeingang (28) des mechanisch angetriebenen Aufladeaggregats (20) verbunden ist, **dadurch gekennzeichnet, dass** der Druckausgang (24) des Abgasturboladers (18) über eine 2-Punkt-Klappe (26) mit dem Saugeingang (28) des mechanisch angetriebenen Aufladeaggregats (20) sowie stromauf der 2-Punkt-Klappe (26) über eine Lastregelklappe (30) mit dem Saugrohr (32) verbunden ist, wobei der Ladeluftkühler (34) in das Saugrohr (32) zu einem Saug-Ladeluftkühler-Modul integriert ist.

2. Brennkraftmaschine nach Anspruch 1, **dadurch gekennzeichnet, dass** die 2-Punkt-Klappe (26) derart ausgebildet ist, dass sie in vollständig geschlossenem Zustand (70) den Luftpfad zum Saugeingang (28) des mechanisch angetriebenen Aufladeaggregats (20) im Wesentlichen gegen einen Nebenluftstrom über das mechanisch angetriebene Aufladeaggregat (20) abdichtet.

3. Verfahren zum Betreiben einer Brennkraftmaschine, welche gemäß wenigstens einem der vorhergehenden Ansprüche ausgebildet ist, **dadurch gekennzeichnet, dass** in solchen Betriebszuständen der Brennkraftmaschine, in denen durch den Abgasturbolader die momentane Momentenanforderung dargestellt werden kann, die 2-Punkt-Klappe in ihre vollständig geschlossene Stellung gebracht und das mechanisch angetriebene Aufladeaggregat deaktiviert wird sowie die Lastregelungen mittels der Lastregelklappe und/oder der Einstellung des Turboladers erfolgt, wobei in solchen Betriebszuständen der Brennkraftmaschine, in denen die momentane Momentenanforderung über das maximal vom Abgasturbolader darstellbare Moment hinaus geht, die 2-Punkt-Klappe in ihre vollständig geöffnete Stellung gebracht, das mechanisch angetriebene Aufladeaggregat aktiviert wird und die Lastregelklappe soweit, wie zum Erreichen der Momentenanforderung notwendig ist, geschlossen wird.

4. Verfahren nach Anspruch 3, **dadurch gekennzeichnet, dass** die 2-Punkt-Klappe im Leerlauf und unterem Teillastbereich geschlossen und in allen anderen Betriebszuständen vollständig geöffnet wird.

## Claims

1. Internal combustion engine, in particular of a motor vehicle, having an air path for intake air in which a supercharging unit (20), which can be activated and deactivated by means of a clutch (36) and is driven mechanically, in particular a compressor, an exhaust gas turbocharger (18), an intake manifold (32) which is connected to air inlets of a cylinder block (10) of the internal combustion engine, and a charge air cooler (34) are arranged, wherein a pressure outlet (35) of the mechanically driven supercharging unit (20) is connected directly to the intake manifold (32), and a pressure outlet (24) of the exhaust gas turbocharger (18) is connected to a suction inlet (28) of the mechanically driven supercharging unit (20), **characterized in that** the pressure outlet (24) of the exhaust gas turbocharger (18) is connected via a 2-point valve (26) to the suction inlet (28) of the mechanically driven supercharging unit (20), and upstream of the 2-point valve (26) to the suction manifold (32) via a load control valve (30), wherein the charge air cooler (34) is integrated into the suction manifold (32) to form a suction charge air cooler module.

2. Internal combustion engine according to Claim 1, **characterized in that** the 2-point valve (26) is embodied in such a way that in the completely closed state (70) it seals off the air path to the suction inlet (28) of the mechanically driven supercharging unit (20) essentially counter to a secondary air stream via the mechanically driven supercharging unit (20).

3. Method for operating an internal combustion engine which is constructed according to at least one of the preceding claims, **characterized in that** in such operating states of the internal combustion engine in which the instantaneous torque request can be formed by means of the exhaust gas turbocharger, the 2-point valve is placed in its completely closed position and the mechanically driven supercharging unit is deactivated, and the load control operations are carried out by means of the load control valve and/or the setting of the turbocharger, wherein in such operating states of the internal combustion engine in which the instantaneous torque request exceeds the maximum torque which can be provided by means of the exhaust gas turbocharger, the 2-point valve is placed in its completely opened position, the mechanically driven supercharging unit is activated and the load control valve is closed as far as is necessary to meet the torque request.

4. Method according to Claim 3, **characterized in that** the 2-point valve is closed in the idling mode and lower partial load range and opened completely in all other operating states.

## Revendications

1. Moteur à combustion interne, notamment d'un véhicule automobile, comprenant un trajet d'air pour l'air aspiré dans lequel sont disposés un groupe de charge (20) à entraînement mécanique, notamment un compresseur, qui peut être mis en service et hors service par le biais d'un accouplement (36), un turbocompresseur de gaz d'échappement (18), un tube d'aspiration (32) relié avec les entrées d'air d'un bloc de culasse (10) du moteur à combustion interne et un refroidisseur d'air de charge (34), une sortie de pression (35) du groupe de charge (20) à entraînement mécanique étant reliée directement au tube d'aspiration (32) et une sortie de pression (24) du turbocompresseur de gaz d'échappement (18) avec une entrée aspiration (28) du groupe de charge (20) à entraînement mécanique, **caractérisé en ce que** la sortie de pression (24) du turbocompresseur de gaz d'échappement (18) est reliée par le biais d'un clapet à 2 points (26) avec l'entrée aspiration (28) du groupe de charge (20) à entraînement mécanique ainsi qu'avec le tube d'aspiration (32) en amont du clapet à 2 points (26) par le biais d'un clapet de régulation de la charge (30), le refroidisseur d'air de charge (34) étant intégré dans le tube d'aspiration (32) pour former un module d'aspiration/de refroidissement d'air de charge.

2. Moteur à combustion interne selon la revendication 1, **caractérisé en ce que** le clapet à 2 points (26) est configuré de telle sorte que dans sa position complètement fermée (70), il ferme hermétiquement le trajet d'air vers l'entrée aspiration (28) du groupe de charge (20) à entraînement mécanique par le biais du groupe de charge (20) à entraînement mécanique, pour l'essentiel par rapport à un courant d'air secondaire.

3. Procédé de fonctionnement d'un moteur à combustion interne qui est configuré selon au moins l'une des revendications précédentes, **caractérisé en ce que** dans les états de fonctionnement du moteur à combustion interne dans lesquels la demande de couple momentanée peut être représentée par le turbocompresseur de gaz d'échappement, le clapet à 2 points est amené dans sa position complètement fermée et le groupe de charge à entraînement mécanique est désactivé et les régulations de charge s'effectuent alors au moyen du clapet de régulation de la charge et/ou du réglage du turbocompresseur, procédé selon lequel, dans les états de fonctionnement du moteur à combustion interne dans lesquels la demande de couple momentanée va au-delà du couple maximum pouvant être représenté par le turbocompresseur de gaz d'échappement, le clapet à 2 points est amené dans sa position complètement ouverte, le groupe de charge à entraînement mécanique est activé et le clapet de régulation de la charge est fermé autant que nécessaire pour atteindre la demande de couple.

4. Procédé selon la revendication 3, **caractérisé en ce que** le clapet à 2 points est fermé au ralenti et dans la zone de charge partielle et il est complètement ouvert dans tous les autres états de fonctionnement.
